# EUROPÄISCHE PATENTSCHRIFT

(11) **EP 3 798 671 B1**
(45) Veröffentlichungstag und Bekanntmachung des Hinweises auf die Patenterteilung: **18.05.2022**
(21) Anmeldenummer: 20193877.6
(22) Anmeldetag: 01.09.2020
(51) Int. Cl.: G01S 7/481, G01S 17/10, G01S 17/42, G01S 7/484, G02B 26/08, G02B 26/10

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION D'OBJETS

(30) Priorität: 24.09.2019 DE 102019125684
(43) Veröffentlichungstag der Anmeldung: 31.03.2021
(73) Patentinhaber: SICK AG, 79183 Waldkirch (DE)
(72) Erfinder: Ostojic, Oliver, 79117 Freiburg (DE)

(56) Entgegenhaltungen:
- DE-A1-102014 118 149
- US-A1- 2019 107 607
- US-A1- 2019 250 254
- US-B1- 10 348 051

## Beschreibung

Die Erfindung betrifft einen optoelektronischen Sensor, insbesondere Laserscanner, und ein Verfahren zur Erfassung von Objekten in einem Überwachungsbereich nach dem Oberbegriff von Anspruch 1 beziehungsweise 9.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit in einem Phasen- oder Pulsverfahren zusätzlich auf die Entfernung des Objektes von dem Laserscanner geschlossen. Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen.

In den meisten Laserscannern wird die Abtastbewegung durch einen Drehspiegel oder ein Polygonspiegelrad erreicht. Stattdessen rotiert in einigen Laserscannern wie etwa demjenigen nach DE 197 57 849 B4 der gesamten Messkopf mit Lichtsendern und Lichtempfängern. Um bei beschränkter Lichtpulsenergie die Reichweite zu steigern, senden einige herkömmliche Laserscanner je Abstandswert mehrere Lichtpulse aus und verrechnen die Ergebnisse dieser Einzelmessungen zu einem gemeinsamen Messwert. Ein derartiger Laserscanner mit Pulsmittelungsverfahren ist beispielsweise aus der DE 10 2010 061 382 A1 bekannt.

Laserscanner werden auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Während die meisten herkömmlichen Laserscanner mit einem einzigen Abtaststrahl arbeiten und dementsprechend nur eine zentrale Abtastebene erfassen, sind auch Mehrebenenscanner mit einer Vielzahl von Abtaststrahlen mit unterschiedlichem Elevationswinkel bekannt. Je mehr Abtaststrahlen dabei verwendet werden, desto besser wird die Winkelauflösung in Elevationsrichtung beziehungsweise der insgesamt erfassbare Elevationswinkelbereich. Viele Abtaststrahlen erhöhen aber auch die thermische Last, und es ist teuer und schwierig, die entsprechenden Sende- und Empfangsbauteile einzubauen, vor allem in kompakter Bauweise etwa mit Unterbringung auf kleinen Elektronikkarten.

Somit muss mit einer bestimmten, möglichst geringen Anzahl von Abtaststrahlen ein Kompromiss zwischen erfassbarem Winkelbereich und Winkelauflösung gefunden werden. Dabei geht entweder bei zu geringer Dichte der Abtastebenen die Fähigkeit verloren, kleine Objekte verlässlich zu erfassen, oder es kann in größeren Elevationswinkeln nichts mehr gemessen werden.

In der EP 2 863 176 A2 wird eine rotierende Plattform offenbart, auf der verschiedene Erfassungsmodule rotieren können. In einer Ausführungsform werden zwei in Drehrichtung um 180° versetzte Abtaststrahlen erzeugt. Flexible Varianten mit vielen Abtaststrahlen sind nicht beschrieben. Die DE 10 2004 014 041 A1 befasst sich mit einem Sensorsystem zur Hinderniserkennung nach Art eines Laserscanners, das eine Laserzeile und eine Reihe von Fotodioden verwendet. Die Anordnung innerhalb der Laserzeile und der Reihe von Fotodioden ist dabei fixiert. Die beschriebene Abwägung zwischen erfassbarem Winkelbereich und Winkelauflösung wird so nicht überwunden.

Die EP 1 936 400 A1 verwendet einen Vortaststrahl, um für die eigentliche Messung die Empfindlichkeit auszusteuern. Das ist kein eigentliches Mehrstrahlsystem, denn der Vortaststrahl trägt keine vollwertige Messung bei, sondern dient nur der Vorbereitung. Außerdem ist der Winkelversatz des Vortaststrahls fest vorgegeben.

Die EP 2 894 493 A1 schlägt einen Kippmechanismus für den Drehspiegel eines Laserscanners vor. Damit wird zwar der Elevationswinkel variabel. Es handelt sich aber lediglich um ein einstrahliges System. Zudem ist die Verkippung aufwändig und träge, sie ist für eine kontinuierliche dreidimensionale Abtastung beispielsweise mit einer Sinuskurve in Elevation geeignet, nicht aber für flexible Konzepte.

Die EP 3 518 000 A1 befasst sich mit verschiedensten Anordnungen der Abtaststrahlen, die durch Drehen und Kippen von Mehrstrahlmodulen erreicht werden. Darunter gibt es auch Konfigurationen, in denen dieselbe Abtastebene mehrfach von nebeneinanderliegenden Abtaststrahlen erfasst wird. Die verschiedenen Einstellungen durch Drehen und Kippen stehen aber nur vorbereitend oder gar in der Fertigung und nicht dynamisch während der Messung zur Verfügung. Außerdem ist die Flexibilität begrenzt.

In der US 2010/0020306 A1 ist für jede Abtastebene ein eigener Lichtsender und Lichtempfänger vorgesehen, womit die Möglichkeit besteht, jede einzelne Abtastebene wie gewünscht einzujustieren. Das ist aber ein mechanischer Vorgang vor dem eigentlichen Messbetrieb, danach besteht keine Flexibilität mehr.

In der noch unveröffentlichten europäischen Anmeldung mit dem Aktenzeichen 19163505.1 wird ein Laserscanner mit einem Pulsmittelungsverfahren und einer Sender- und Empfängermatrix beschrieben. Die Einzelmessungen, die zu einer jeweiligen Abstandsmessung des Pulsmittelungsverfahrens beitragen, stammen von verschiedenen Paaren von Lichtquellen und Empfangspixeln, und zwar so, dass trotz der Scanbewegung derselbe Punkt mehrfach angetastet wird. Die Flexibilität eines mehrstrahligen Laserscanners wird aber auf diese Weise nicht erhöht.

Es gibt im Stand der Technik auch Bestrebungen, ein flächenscannendes System ohne rotierende Ablenkeinheit aufzubauen (Solid-State-Scanner). Stattdessen wird der Abtaststrahl durch eine Änderung von elektrischen Parametern eines optischen Elements oder Mikrobauteils abgelenkt.

Beispielsweise wird in der EP 2 708 914 A1 der gepulste Sendelichtstrahl einer Lichtquelle mit einem MEMS-Spiegel in X-Richtung und Y-Richtung über die abzutastende Fläche geführt. Die reflektierten Lichtpulse werden von einer SPAD-Matrix empfangen (Single-Photon Avalanche Diode), von der jeweils nur diejenigen SPADs aktiviert werden, die den aktuell von dem Sendelichtstrahl beleuchteten Bereich beobachten. Es werden auch andere Technologien vorgeschlagen, um die Ablenkbewegung ohne drehende mechanische Teile zu realisieren, beispielsweise ein auf Flüssigkristallen basierendes Phased Array in der US 5 15 1814 oder ein optoakustischer Modulator in der US 10 175 344 B2. In der noch unveröffentlichten deutschen Patentanmeldung mit dem Aktenzeichen 102018129972.9 wird eine Krümmung einer Empfängerzeile durch Anbringen auf einer Maßverkörperung vorgegeben oder mittels einer Krümmungseinrichtung verändert.

Aus der US 2018/0259645 A1 ist ein LIDAR-System (Light Detection and Ranging) mit einer VCSEL-Matrix (Vertical Cavity Surface-Emitting Laser) als Lichtsender und einer SPAD-Matrix (Single-Photon Avalanche Diode) als Lichtempfänger bekannt. Es gibt eine 1:1-Zuordnung von Lichtsenderelement und Lichtempfangselement, um jeweils einen Abtaststrahl zu bilden. Eine Änderung der Orientierung der Abtaststrahlen ist nicht vorgesehen.

Der Vorteil der Solid-State-Technologie ist, dass keine beweglichen Teile mehr benötigt werden. Allerdings ist der Scanbereich stark eingeschränkt, und zwar in dem Winkel in der Horizontalebene, den ein herkömmlicher Laserscanner durch seine Drehung um bis zu 360° abdeckt.

Die US 2019/250254 A1 und US 2019/0107607 A1 offenbaren jeweils ein LIDAR-System, das zweidimensionale Abtastmuster erzeugt. Aus der US 10 348 051 B1 ist ein fiberoptischer Verstärker für ein solches System bekannt.

Die DE 10 2014 118 149 A1 befasst sich mit einem Laserscanner, in dessen rotierender Ablenkeinheit ein Zusatzantrieb mitbewegt wird, der erneut die erste Ablenkeinheit oder eine weitere Ablenkeinheit bewegt.

Es ist daher Aufgabe der Erfindung, einen flexibler einsetzbaren gattungsgemäßen Sensor zu schaffen.

Diese Aufgabe wird durch einen optoelektronischen Sensor und ein Verfahren zur Erfassung von Objekten in einem Überwachungsbereich nach Anspruch 1 beziehungsweise 9 gelöst. In dem Sensor erzeugt ein Lichtsender mindestens einen Scan- oder Abtaststrahl. Eine bewegliche erste Ablenkeinheit lenkt den Abtaststrahl in einer ersten Richtung aus. Die erste bewegliche Ablenkeinheit führt dabei eine makroskopische Bewegung aus, sie ist also ein Drehspiegel, beweglicher Abtastkopf oder dergleichen für die übliche horizontale Abtastbewegung eines herkömmlichen Laserscanners. Die erste Richtung also die Drehrichtung und variiert den horizontalen Drehwinkel. Ein Lichtempfänger erzeugt aus dem nach Remission an einem Objekt zurückkehrenden Abtaststrahl ein Empfangssignal. Eine Steuer- und Auswertungseinheit erfasst anhand des Empfangssignals Objekte und misst in einem Lichtlaufzeitverfahren Abstände zu den jeweils angetasteten Objektpunkten.

Die Erfindung geht von dem Grundgedanken aus, die klassische Plattform mit einer beweglichen ersten Ablenkeinheit mit einer zweiten Ablenkeinheit eines Solid-State-Verfahrens zu kombinieren. Solid-State-Verfahren bedeutet, dass sich die zweite Ablenkeinheit nicht bewegt, höchstens in Form mikromechanischer Bewegungen von Mikroelementen. Das schließt aber keineswegs aus, dass die zweite Ablenkeinheit als Ganzes von der ersten Ablenkeinheit bewegt wird, das wäre keine von der zweiten Ablenkeinheit erzeugte Bewegung.

Es entsteht ein Hybrid aus klassischem und Solid-State-Scanner. Die zweite Ablenkeinheit bewegt den Abtaststrahl zusätzlich, und zwar in der ersten Richtung und/oder einer zweiten Richtung quer dazu. Dadurch wird die von der ersten Ablenkeinheit vorgegebene Drehbewegung der Abtaststrahlen modifiziert und/oder mit einer Bewegung in Elevationsrichtung überlagert. Die zweite Ablenkeinheit sorgt folglich dafür, dass sich die Abtaststrahlen zusätzlich zu der durch die erste Ablenkeinheit erzeugten Bewegung auch gegenüber einem mit dieser Bewegung mitbewegten Koordinatensystem bewegen. Die erste Richtung oder Drehrichtung der ersten Ablenkeinheit wird später in der Figurenbeschreibung auch als X-Richtung, die zweite Richtung oder Elevationsrichtung als Y-Richtung bezeichnet.

Die Erfindung hat den Vorteil, dass durch die Kombination von klassischer Scanbewegung und Solid-Stateverfahren Vorteile beider Techniken verwirklicht werden. Insbesondere ist der oben beschriebene Kompromiss bei mehrstrahligen Systemen wesentlich leichter zu finden, da das Solid-State-Verfahren eine flexible, dynamische Anpassung an die aktuellen Erfordernisse ermöglicht. Es muss also nicht mehr a priori entschieden werden, entweder auf eine gute Winkelauflösung und damit die Detektionsfähigkeit für kleine Objekte oder einen großen Erfassungswinkel auch für Objekte in Randbereichen zu verzichten. Das gilt für den Elevationswinkel, den das Solid-State-Verfahren abdeckt, und zugleich für den horizontalen Drehwinkel, denn die erste Ablenkeinheit ermöglicht ohne Weiteres Winkelbereiche von mindestens 180° und auch 270° bis hin zu vollen 360°. Weiterhin besteht die Möglichkeit, durch Einsatz der variablen zusätzlichen zweiten Ablenkeinheit einen Vor- beziehungsweise Nachlauf von Abtaststrahlen, eine dynamische Objektverfolgung, ein diskretes Index-Tasten sowie eine Blendvermeidung des Empfangskanals umzusetzen.

Die zweite Ablenkeinheit weist bevorzugt eine MEMS-(Micro-Electro-Mechanical System), DMD-(Digital Micromirror Device), OPA-(Optical Phased Array), LC-(Liquid Crystal) oder AOM-(Acousto Optical Modulator)-Einrichtung auf. Das sind geeignete Solid-State-Techniken, um den Abtaststrahl ohne makroskopische Bewegung, d.h. entweder gänzlich ohne bewegte Teile oder allenfalls mit bewegten Mikroelementen abzulenken. Eine weitere bevorzugte Ausführungsform verwendet eine Flüssiglinse, in der die Grenzschicht zwischen zwei nicht mischbaren Medien durch Ansteuerung einer Elektrodenanordnung verkippt werden kann. Nochmals alternativ wird eine Abtastbewegung emuliert, indem ein aktiver Bereich auf einem Lichtquellen-Array verschoben wird, etwa auf einem VCSEL-Array. Auch der zugehörige Lichtempfänger kann eine Zeilen- oder Matrixanordnung beispielsweise von SPADs (Single-Photon Avalanche Diode) sein, bei dem nur ein Pixelbereich entsprechend den aktiven Lichtquellen aktiv ist. Durch die selektive Aktivierung werden keine Empfangssignale von Lichtempfangselementen erzeugt oder ausgewertet, die zum Nutzsignal nicht beitragen können. Bei einer SPAD-Matrix als Lichtempfänger können SPADs dadurch inaktiv geschaltet werden, dass die Vorspannung unter die Durchbruchspannung abgesenkt wird.

Die zweite Ablenkeinheit ist bevorzugt von der ersten Ablenkeinheit mitbewegt angeordnet. Vorzugsweise ist dafür die erste Ablenkeinheit als beweglicher Abtastkopf ausgestaltet, in dem die zweite Ablenkeinheit mit Lichtsender und Lichtempfänger rotiert. Es ist jedoch auch denkbar, mit der zweiten Ablenkeinheit Abtaststrahlen in unterschiedlichen Richtungen auf einen Drehspiegel zu lenken, wobei aber dann die Rotation des Drehspiegels zu einer Rotation der Position des Abtaststrahls führt, so dass das insgesamt resultierende Abtastmuster recht komplex wird.

Der Lichtsender ist bevorzugt dafür ausgebildet, mehrere Abtaststrahlen zu erzeugen und/oder der Lichtempfänger weist mehrere Lichtempfangselemente auf, um aus mehreren Abtaststrahlen mehrere Empfangssignale zu erzeugen. Auf diese Weise entsteht ein Mehrstrahlsystem mit beweglichen Abtaststrahlen. Es sei angemerkt, dass Abtaststrahlen nicht als Strahlen im Sinne der Strahlenoptik innerhalb eines größeren Lichtbündels zu verstehen, sondern selbst als Lichtbündel, mit denen eine jeweilige Abtastung, also eine Lichtlaufzeitmessung an einem Abtastpunkt, durchgeführt wird. Mehrere Abtaststrahlen können durch mehrere Lichtquellen und/oder Strahlteilungen beispielsweise in einem Mustererzeugungselement wie einem diffraktiven optischen Element erzeugt werden. Der Lichtempfänger erzeugt ein Empfangssignal je Abtaststrahl, das dann ausgewertet wird. Dazu sind vorzugsweise mehrere diskrete Lichtempfangselemente und/oder Bereiche auf einem pixelaufgelösten Lichtempfänger vorgesehen.

Die zweite Ablenkeinheit ist bevorzugt dafür ausgebildet, mehrere Abtaststrahlen einzeln oder in Gruppen unterschiedlich zu bewegen. Die Ablenkung wirkt also individuell auf bestimmte Abtaststrahlen. Damit sind die Messpunkte der Abtaststrahlen zumindest in den Grenzen der möglichen Ablenkung frei wählbar, und Abtastbereiche können besonders flexibel definiert werden. Es ist denkbar, dass mehrere Abtaststrahlen in ihrer Bewegung als Gruppe gekoppelt sind, beispielsweise, weil Mikroelemente der zweiten Ablenkeinheit nur in ganzen Zeilen oder Spalten ansteuerbar sind, oder auch indem ein Aktor einen Träger mit mehreren Lichtquellen unterschiedlich variabel krümmt.

Die Steuer- und Auswertungseinheit ist bevorzugt dafür ausgebildet, Abtaststrahlen in der zweiten Richtung aufeinander zu oder voneinander weg zu bewegen. Dadurch wird der Abstand zwischen den Abtaststrahlen in Elevation variiert. Das kann ein statischer Vorgang sein, um variabel einen guten Kompromiss zwischen Winkelauflösung und erfasstem Winkelbereich für die aktuelle Messsituation zu finden. Ebenso kann dynamisch eine kontinuierliche oder mehrfache sprunghafte Änderung vorgenommen werden, die auch den Elevationswinkel in Überlagerung mit der Drehbewegung abscannt. In beiden Fällen lässt sich die gleichzeitige Detektionsmöglichkeit kleiner Objekte und ein großer abgedeckter Raumbereich bei Nutzung nur weniger Abtaststrahlen besser miteinander vereinbaren.

Die Steuer- und Auswertungseinheit ist bevorzugt dafür ausgebildet, ein Winkelraster der Abtaststrahlen in der zweiten Richtung gröber oder feiner einzustellen. In diesem Fall bilden die Abtaststrahlen ein Winkelraster, sind also in Elevationsrichtung gleichmäßig zueinander beabstandet. Die zweite Ablenkeinheit variiert diesen Abstand der Abtaststrahlen untereinander, so dass entweder ein schmales Winkelsegment mit dicht liegenden Abtaststrahlen oder ein größeres Winkelsegment eher großmaschig mit mehr Abstand zwischen den Abtaststrahlen überwacht wird.

Die Steuer- und Auswertungseinheit ist bevorzugt dafür ausgebildet, mehrere Abtaststrahlen in der ersten Richtung und/oder der zweiten Richtung zusammenzurücken.

Die Abtaststrahlen werden also zueinander geneigt. Dieses Zusammenrücken führt vorzugsweise dazu, dass die Abtaststrahlen in einer spezifizierbaren Entfernung von dem Sensor denselben Abtastpunkt treffen, oder jedenfalls eine enge Umgebung, die kleiner ist als das durch Rotation und Messwiederholrate in Drehrichtung der ersten Ablenkeinheit vorgegebene Raster. Das führt effektiv zu einer Mehrfachmessung am selben beziehungsweise eng benachbarten Ort.

Die Steuer- und Auswertungseinheit ist bevorzugt dafür ausgebildet, einen Abtaststrahl in der ersten Richtung vor- und/oder nachlaufen zu lassen, insbesondere in einer Rampe von einem maximalen Vorlauf zu einem maximalen Nachlauf oder umgekehrt. Die Messungen weichen damit von dem herkömmlich starren, durch Umlaufgeschwindigkeit und Messwiederholrate vorgegebenen Winkelraster ab. Die zweite Ablenkeinheit wirkt in Drehrichtung der ersten Ablenkeinheit, um deren Abtastbewegung vorübergehend zu beschleunigen oder zu verlangsamen. Es können sowohl der einzige Abtaststrahl eines Einstrahlsystems als auch einzelne, mehrere oder alle Abtaststrahlen eines Mehrstrahlsystems in gemeinsamer oder unterschiedlicher Weise vor-und/oder nachlaufen. Mit einer Rampe oder einer Art Sägezahn des Vor- und Nachlaufs wird bereichsweise eine gleichmäßige schneller oder langsamere Abtastbewegung erreicht. Das Winkelraster wird also abschnittsweise gespreizt oder gestaucht, möglicherweise unter Überspringen bestimmter Winkelbereiche.

Die Steuer- und Auswertungseinheit ist bevorzugt dafür ausgebildet, einen Abtaststrahl durch Vorlauf und/oder Nachlauf in der ersten Richtung vorübergehend an einem Abtastpunkt festzuhalten. Die zweite Ablenkeinheit lenkt dafür den Abtaststrahl in der ersten Richtung gerade entsprechend der Drehgeschwindigkeit der ersten Ablenkeinheit ab, jedoch mit umgekehrtem Vorzeichen, so dass ein gleichsam stehender Abtaststrahl erzeugt wird. Das Vor- oder Nachlaufen entspricht bildlich gesprochen einer Augenbewegung, mit der ein Objekt trotz Relativbewegung zwischen Betrachter und Objekt fixiert bleibt. In der zweiten Richtung kann eine Bewegung überlagert werden, vorzugsweise bleibt der Abtaststrahl aber auch hier festgehalten.

Die Steuer- und Auswertungseinheit ist bevorzugt dafür ausgebildet, an dem Abtastpunkt oder an benachbarten Punkten, die näher benachbart sind als eine ursprüngliche Winkelauflösung einer Abtastung mit der ersten Ablenkeinheit, mehrfach eine Lichtlaufzeit zu messen. Der Vor- und Nachlauf wird also dafür genutzt, einen bestimmten Abtastpunkt oder Abtastbereich mehrfach zu vermessen. Dazu wird ein Vor- und/oder Nachlauf gewählt, mit dem die zweite Ablenkeinheit in der ersten Richtung eine Ablenkung überlagert, die jeweils zu dem bestimmten Abtastpunkt gerichtet ist.

Die Steuer- und Auswertungseinheit ist bevorzugt dafür ausgebildet, einen interessierenden Winkelbereich bezüglich der ersten Richtung durch Vorlauf und/oder Nachlauf mit verbesserter Winkelauflösung abzutasten. Auf diese Weise werden ROIs (region of interest) definiert, beispielsweise vorab anhand der Anwendungssituation oder dynamisch, etwa weil hier in einem früheren Umlauf der ersten Ablenkeinheit ein Objekt erfasst wurde. Innerhalb der ROI ist aufgrund des Vor- und/oder Nachlauf die Winkelauflösung verbessert. Diese zusätzlichen Messungen fehlen dann in einer Umgebung der ROI, es wird also in Kauf genommen, dass sich hier die Winkelauflösung verschlechtert oder womöglich Winkelbereiche ganz übersprungen werden.

Die Steuer- und Auswertungseinheit ist bevorzugt dafür ausgebildet, die mit mehreren Abtaststrahlen und/oder in mehreren zeitlich aufeinanderfolgenden Messungen erzeugten Empfangssignale gemeinsam auszuwerten, um mit einem Lichtlaufzeitverfahren den Abstand zu dem Objekt zu bestimmen. Es wird mit anderen Worten ein Pulsmittelungsverfahren eingesetzt. Die Einzelmessungen mehrerer Abtaststrahlen und/oder mehrerer nacheinander durchgeführte Einzelmessungen werden statistisch zu einem gemeinsamen Messwert verrechnet. Vorzugsweise werden dabei die Abtaststrahlen von der zweiten Ablenkeinheit in der ersten Richtung und/oder der zweiten Richtung zusammengerückt wie weiter oben vorgeschlagen. Dadurch erfassen mehrere Einzelmessungen zumindest nahezu denselben Abtastpunkt. Sollen n Einzelmessungen zusammengefasst werden, so hat sich bei einem herkömmlichen Pulsmittelungsverfahren die Ablenkeinheit n-mal weitergedreht, so dass sich die Messung über einen gewissen Winkelbereich verschmiert. Durch das Zusammenrücken können m Messungen praktisch gleichzeitig denselben Abtastpunkt antasten, so dass nur noch über einen um den Faktor m verkleinerten Winkelbereich gemessen wird. Insbesondere wird bei m=n praktisch nur noch ein Abtastpunkt wie bei einem Einzelpulsverfahren erfasst, oder der um den Faktor m verkleinerte Winkelbereich wird durch Vor- und/oder Nachlauf auf einen Abtastpunkt zusammengeschnürt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Schnittdarstellung eines Laserscanners;
- Fig. 2: eine Frontalansicht auf einen individuell beweglichen Abtaststrahl;
- Fig. 3: eine Frontalansicht auf mehrere individuell bewegliche Abtaststrahlen;
- Fig. 4: eine Frontalansicht auf mehrere zu einer Spalte mit variablem gegenseitigem vertikalem Abstand angeordnete Abtaststrahlen;
- Fig. 5: eine Seitenansicht eines Laserscanners mit den Abtaststrahlen gemäß Figur 4;
- Fig. 6: eine Frontalansicht auf einen Abtaststrahl in mehreren aufeinanderfolgenden Abtastungen mit Vor- und Nachlauf; und
- Fig. 7: eine Frontalansicht auf mehrere zueinander zusammengerückte Abtaststrahlen.

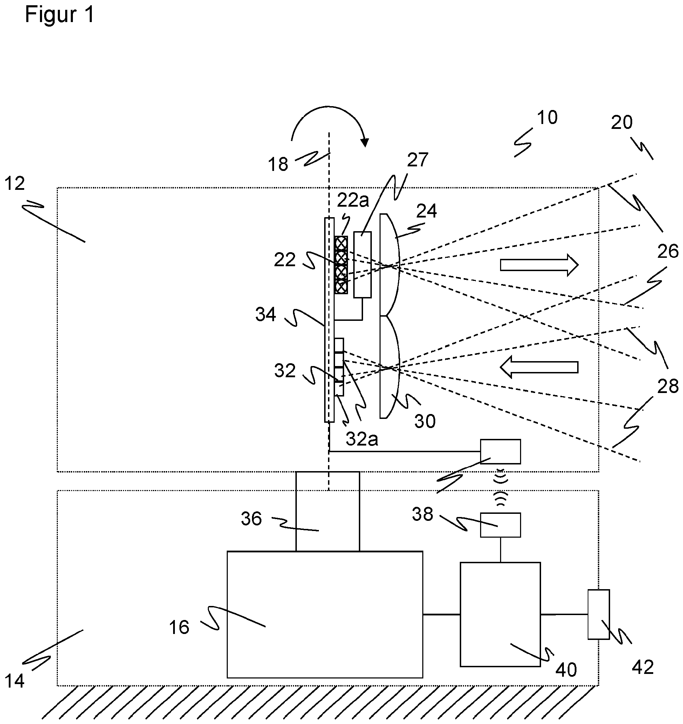

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche erste Ablenkeinheit 12 und eine Sockeleinheit 14. Die erste Ablenkeinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die erste Ablenkeinheit 12 in eine Bewegung um eine Drehachse 18 versetzt, um so einen Überwachungsbereich 20 periodisch abzutasten.

In der ersten Ablenkeinheit 12 erzeugt ein Lichtsender 22 mit mehreren Lichtquellen 22a, beispielsweise LEDs oder Laser in Form von Kantenemittern oder VCSELs, mit Hilfe einer Sendeoptik 24 mehrere Abtaststrahlen 26, die in den Überwachungsbereich 20 ausgesandt werden. Im dargestellten Beispiel sind es vier Abtaststrahlen 26 für vier Abtastebenen, es können mehr, auch deutlich mehr, und ebenso weniger Abtaststrahlen 26 sein. Auch der Fall eines Einzelstrahlsystems mit nur einem Abtaststrahl 26 ist denkbar. Außerdem ist zu beachten, dass es sich um eine Schnittansicht handelt. Der Lichtsender 22 ist deshalb als Spalte dargestellt, tatsächlich sind vorzugsweise weitere Lichtquellen 22a in eine Richtung senkrecht zur Papierebene vorhanden. Anstelle einer gemeinsamen Sendeoptik 24 sind Einzeloptiken möglich. Die mehreren Abtaststrahlen 26 können auch dadurch entstehen, dass das Licht einer Lichtquelle oder einiger Lichtquellen durch ein Strahlteilerelement, ein diffraktives optisches Element oder dergleichen aufgeteilt wird.

Eine zweite Ablenkeinheit 27 ist zwischen Lichtsender 22 und Sendeoptik 24 angeordnet. Alternativ können Sendeoptik 24 und zweite Ablenkeinheit 27 auch vertauscht sein. Weiterhin ist denkbar, dass zumindest Teile der Sendeoptik 24 mit der zweiten Ablenkeinheit 27 gemeinsam ausgebildet sind, beispielsweise strahlformende optische Mikroelemente, wie Mikrolinsen, der zweiten Ablenkeinheit 27 in Kombination mit einer oder mehreren größeren Sendelinsen. Die zweite Ablenkeinheit 27 ist dazu ausgebildet, mit einem Solid-State-Verfahren die Abtaststrahlen 26 einzeln, in Gruppen oder gemeinsam zusätzlich zu der Ablenkung durch die erste Ablenkeinheit 12 nochmals abzulenken. Solid-State-Verfahren bedeutet, dass die zweite Ablenkeinheit keine makroskopisch bewegten Teile aufweist wie die erste Ablenkeinheit 12, sondern allein durch elektrische Steuerung beziehungsweise allenfalls bewegliche Mikroelemente wirkt. Beispiele für Solid-State-Techniken sind MEMS (Micro-Electro-Mechanical System), DMD (Digital Micromirror Device), OPA (Optical Phased Array), LC (Liquid Crystal) oder AOM-(Acousto Optical Modulator). Auch eine kippbare Flüssiglinse der Sendeoptik 24 ist denkbar.

Treffen die Abtaststrahlen 26 in dem Überwachungsbereich 20 auf ein Objekt, so kehren entsprechende remittierte Abtaststrahlen 28 zu dem Sensor 10 zurück. Die remittierten Abtaststrahlen 28 werden von einer Empfangsoptik 30 auf einen Lichtempfänger 32 mit mehreren Lichtempfangselementen 32a geführt, die jeweils ein elektrisches Empfangssignal erzeugen. Die Lichtempfangselemente 32a können separate Bauteile oder Pixel einer integrierten Matrixanordnung sein, beispielsweise Photodioden, APDs (Avalanche Diode) oder SPADs (Single-Photon Avalanche Diode), wobei vorzugsweise nur den Abtaststrahlen 26, 28 entsprechende Pixelbereiche aktiviert oder ausgelesen werden. Die Bemerkungen zur Sendeseite gelten sinngemäß auch hier. Es gibt also möglicherweise mehrere Lichtempfangselemente 32a in einer Richtung senkrecht zur Papierebene, es können mehrere Einzeloptiken oder mehrteilige Objektive als Empfangsoptik 30 vorgesehen sein, und mehrere oder alle remittierten Abtaststrahlen 28 können auf einem gemeinsamen Lichtempfangselement erfasst werden, wo sie beispielsweise durch Zeit- oder Frequenzmultiplexing voneinander getrennt werden. Die in Figur 1 nur sendeseitig wirkende zweite Ablenkeinheit 27 könnte auch empfangsseitig wirken, oder es kann eine weitere Ablenkeinheit als empfangsseitiger Teil der zweiten Ablenkeinheit 27 vorgesehen sein.

Lichtsender 22 und Lichtempfänger 32 sind in dieser Ausführungsform gemeinsam auf einer Leiterkarte 34 angeordnet, die auf der Drehachse 18 liegt und mit der Welle 36 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 32 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 38 verbindet die bewegliche erste Ablenkeinheit 12 mit der ruhenden Sockeleinheit 14. Dort befindet sich eine Steuer- und Auswertungseinheit 40, die zumindest teilweise auch auf der Leiterkarte 34 oder an anderem Ort in der ersten Ablenkeinheit 12 untergebracht sein kann. Insbesondere ist vorstellbar, einen Teil der Auswertung schon im Lichtempfänger 32 unterzubringen, etwa durch eine ASIC-Bauweise (Application-Specific Integrated Circuit), wobei einzelne Zellen gleich digital auswertet und weiterverarbeitet werden. Die Steuer- und Auswertungseinheit 40 steuert den Lichtsender 22 und erhält die Empfangssignale des Lichtempfängers 32 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der ersten Ablenkeinheit 12 bestimmt.

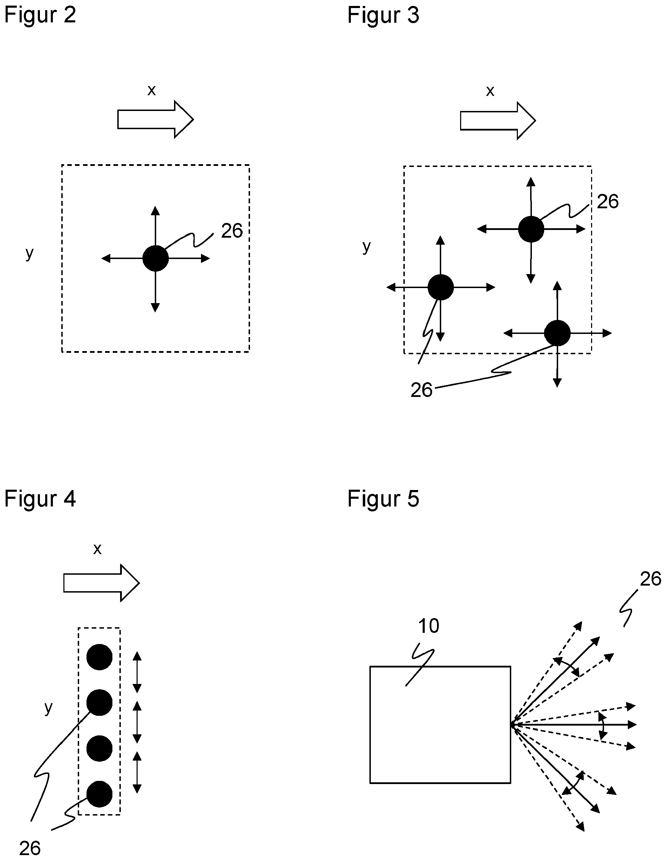

Zur Auswertung wird in einem Lichtlaufzeitverfahren die Distanz zu einem angetasteten Objekt gemessen. Zusammen mit der Information über die Winkelstellung der ersten Ablenkeinheit 12 von der Winkelmesseinheit, der Identität des jeweiligen Abtaststrahls 26, 28 und der zusätzlichen Ablenkung durch die zweite Ablenkeinheit wird jeweils ein Scan- oder Messpunkt in dreidimensionalen Koordinaten gewonnen. Welcher dreidimensionale Raumbereich insgesamt konkret erfasst ist, entscheidet sich durch die jeweilige Art der Ablenkung der zweiten Ablenkeinheit 27, die später unter Bezugnahme auf die Figuren 2 bis 7 genauer erläutert wird.

Damit sind die Objektpositionen beziehungsweise Objektkonturen bekannt und können über eine Sensorschnittstelle 42 ausgegeben werden. Die Sensorschnittstelle 42 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie einleitend kurz vorgestellt. Alternativ zu einem rotierenden Messkopf als erste Ablenkeinheit 12 ist auch eine periodische Ablenkung mittels Drehspiegel oder einem Facettenspiegelrad denkbar.

Während der Bewegung der ersten Ablenkeinheit 12 wird bei festem Elevationswinkel durch jeden der Abtaststrahlen 26 jeweils eine Fläche abgetastet. Nur bei einem Elevationswinkel von 0°, also einem in Figur 1 nicht vorhandenen horizontalen Abtaststrahl, wird dabei eine Abtastebene des Überwachungsbereichs 20 abgetastet. Abtaststrahlen 26 mit endlicher Elevation tasten die Mantelfläche eines Kegels ab, der je nach Elevationswinkel unterschiedlich spitz ausgebildet ist. Bei mehreren Abtaststrahlen 26, die in unterschiedlichen Winkeln nach oben und unten abgelenkt werden, entsteht insgesamt als Abtastgebilde eine Art Schachtelung von mehreren Sanduhren. Auch diese Flächen werden hier vereinfachend als Abtastebenen bezeichnet. Durch die zusätzliche Ablenkung der zweiten Ablenkeinheit 27 entstehen durchaus auch massive Abweichungen von den geschilderten Sanduhren.

Figur 2 zeigt eine Frontalansicht auf einen Abtaststrahl 26, der also aus der Papierebene heraus verläuft und im Querschnitt zu sehen ist. Mit vier Richtungspfeilen sind die möglichen Ablenkungen des Abtaststrahls 26 durch die zweite Ablenkeinheit 27 gezeigt. Die zweite Ablenkeinheit 27 sorgt für eine Ablenkung in einer X-Richtung und einer Y-Richtung. Die X-Richtung ist diejenige, in der sich die erste Ablenkeinheit 12 bewegt. Deren unterliegende Drehbewegung ist durch einen Blockpfeil gezeigt. Nur lokal, zu einem festen Zeitpunkt, ist die X-Richtung eine kartesische Koordinate, genaugenommen ändert sich diese Richtung ständig und wäre über den Winkel in Drehrichtung zu beschreiben. Eine Ablenkung der zweiten Ablenkeinheit 27 in X-Richtung vergrößert oder vermindert die Ablenkung der ersten Ablenkeinheit 12. Die Y-Richtung ist die Richtung senkrecht dazu, zugleich parallel zur Drehachse. Eine Ablenkung der zweiten Ablenkeinheit 27 in Y-Richtung verändert den Elevationswinkel des Abtaststrahls 26.

Der einzelne Abtaststrahl 26 der Figur 2 entspricht einem Einstrahlsystem, dessen einziger Abtaststrahl 26 mittels der zweiten Ablenkeinheit 27 variabel in X- und/oder Y-Richtung zusätzlich abgelenkt werden kann. Dabei ist denkbar, dass die zweite Ablenkeinheit eingeschränkt ist, beispielsweise nur in Y-Richtung ablenken kann. Der Winkelbereich einer Ablenkung durch ein Solid-State-Verfahren ist begrenzt, was durch das gestrichelte umgebende Rechteck symbolisiert wird. Durch die zusätzliche Ablenkung der zweiten Ablenkeinheit kann anstelle eine zentralen Abtastebene wie bei einem herkömmlichen Laserscanner eine Ebene mit bestimmter Elevation, ein Vor- oder Nachlauf gegenüber der unterliegenden Drehbewegung der ersten Abtasteinheit 12 und allgemein ein variables Abtastmuster im dreidimensionalen Raum abgetastet werden.

Figur 3 zeigt eine Frontalansicht entsprechend Figur 2, nun jedoch auf mehrere Abtaststrahlen 26 eines mehrstrahligen Systems. Für die Ablenkmöglichkeiten der einzelnen Abtaststrahlen 26 gelten die Erläuterungen zu dem einzelnen Abtaststrahl 26 der Figur 2. Je nach Ausführungsform kann die zweite Ablenkeinheit 27 die Abtaststrahlen 26 individuell und unabhängig voneinander ablenken, oder es gibt eine teilweise oder vollständige Kopplung zwischen Gruppen von Abtaststrahlen 26 oder sogar allen Abtaststrahlen.

Die Figuren 4 und 5 illustrieren ein Anwendungsbeispiel mit Variation der Abtaststrahlen 26 nur in Y-Richtung, also in Elevation. Zusätzlich könnte eine Ablenkung in X-Richtung überlagert werden, insbesondere ein Vor- beziehungsweise Nachlauf. Figur 4 ist eine Frontalansicht entsprechend den Figuren 2 und 3 auf rein beispielhaft vier Abtaststrahlen 26, die in Y-Richtung übereinander liegen. Der Abstand zwischen den vier Abtaststrahlen 26 ist mittels der zweiten Ablenkeinheit 27 variabel.

Es ist nicht erforderlich, dass die Abtaststrahlen 26 einen gleichmäßigen Abstand zueinander aufweisen. Zum einen kann das lediglich ein Ruhezustand sein, aus dem während der Ablenkungen durch die zweite Ablenkeinheit 27 abgewichen wird. Es kann aber überdies vorteilhaft sein, von vorneherein kein gleichmäßiges Winkelraster in Elevation anzustreben. Beispielsweise kann es einen äußeren Abtaststrahl 26 in großem Elevationswinkelabstand geben, um dort zumindest eine grobe Information über vorhandene Objekte zu gewinnen, während nur für Elevationswinkel in der Nähe der Horizontalen mit einem feineren Winkelraster genauere Objektinformationen erfasst werden.

Figur 5 zeigt eine entsprechende Seitenansicht des nur als schematischer Block repräsentierten Sensors 10 und der Abtaststrahlen 26. Das Zusammen- und Auseinanderschieben der Abtaststrahlen gemäß Figur 4 durch Variation der Ablenkung der zweiten Ablenkeinheit 27 in Y-Richtung führt zu einer Variation im Elevationswinkel. Diese Verstellung kann statisch sein, um einen bestimmten Elevationswinkelabstand zwischen den Abtaststrahlen 26 einzustellen. Alternativ werden die Abtaststrahlen 26 dynamisch in Elevationsrichtung geschwenkt, und zwar vorzugsweise jeder in einem von mehreren einander ergänzenden Elevationswinkelbereichen. Dadurch überlagert sich dem Scanvorgang in X-Richtung durch die erste Ablenkeinheit 12 ein weiterer Scanvorgang in Y-Richtung durch die zweite Ablenkeinheit 27. Es genügen wenige Abtaststrahlen 26, um den Raum abzuscannen, wofür bisher eine Vielzahl von Abtaststrahlen für ein hinreichend dichtes Winkelraster erforderlich waren. Auch im statischen Fall gibt es einen Gewinn, weil das verfügbare dann starre Winkelraster optimal an die aktuellen Anforderungen angepasst werden kann

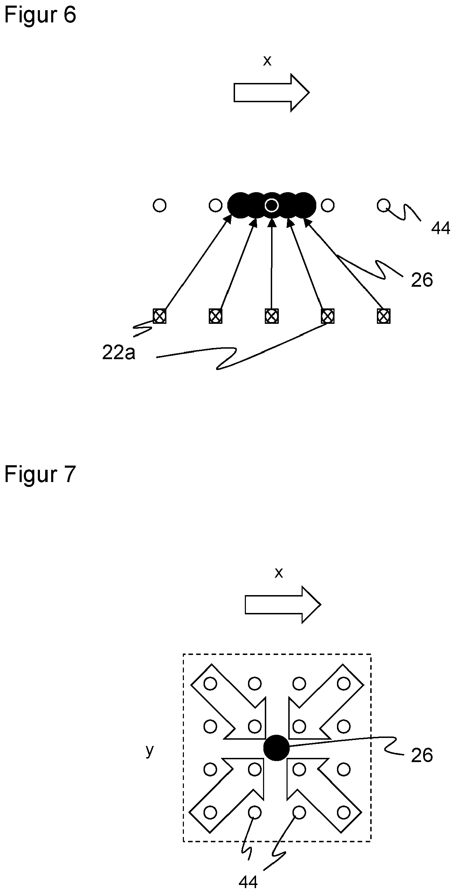

Figur 6 illustriert in einer weiteren Frontalansicht auf einen Abtaststrahl 26 einen Vorbeziehungsweise Nachlauf. Das ist eine Ablenkung nun in X-Richtung, die isoliert oder in Kombination mit einer Ablenkung in Y-Richtung vorgesehen sein kann. Der Sensor 10 misst im Grundzustand ohne die überlagerte Ablenkung der zweiten Ablenkeinheit 27 während der Drehbewegung der ersten Ablenkeinheit 12 an Messpunkten, die ein einem durch die Messwiederholrate gegebenen gleichmäßigen Winkelraster 44 liegen. Vor- beziehungsweise Nachlauf bedeutet nun, dass durch zusätzliche Ablenkung der zweiten Ablenkeinheit 27 in X-Richtung von diesem Winkelraster 44 abgewichen wird.

Durch Vor- und/oder Nachlauf lassen sich Messungen in bestimmten Winkelbereichen verdichten, was durch weniger dichte Messungen oder Messlücken in anderen Winkelbereichen kompensiert werden muss. Dadurch können interessierende Bereiche (ROI, region of interest) definiert werden, in denen mit höherer Winkelauflösung gemessen wird. Das kann eine statische Festlegung für einen längeren Anwendungszeitraum sein. Ein Beispiel wäre ein Laserscanner an einem Fahrzeug, bei dem Messinformation in Fahrtrichtung in aller Regel wichtiger ist als seitliche Messinformation. Ein weiteres, nun dynamisches Beispiel ist eine Objektverfolgung. Dann wird ein interessierender Bereich dort definiert, wo in einer früheren Abtastung ein Objekt erfasst wurde beziehungsweise wo es nun bei Extrapolation der bisherigen Bewegung erwartet wird. Es ist aber zu beachten, dass der Vor- und Nachlauf nur über einen begrenzten Gesamtwinkel möglich ist, da die zweite Ablenkeinheit 27 mit ihrem Solid-State-Verfahren auf einen bestimmten Winkelbereich beschränkt ist.

Speziell ist durch Vor- und/oder Nachlauf möglich, die Abtastung für mehrere Messungen gewissermaßen an einem Abtastpunkt anzuhalten. Dazu führt beispielsweise die zweite Ablenkeinheit 27 in einer Art Rampe oder Sägezahn eine zu der ersten Ablenkeinheit 12 gegenläufige Bewegung in X-Richtung durch. Dieses Beispiel ist in Figur 6 illustriert. Im unteren Bereich sind Lichtquellen 26a gezeigt. Das sind entweder mehrere physische Lichtquellen 26a oder die Ausgangspunkte mehrerer Abtaststrahlen 26 nach einer Strahlteilung, oder es symbolisiert denselben Abtaststrahl 26 zu aufeinanderfolgenden Zeitpunkten. Im Grundzustand würde ein Abtastpunkt im Winkelraster 44 angetastet, d.h. die gezeigten Abtaststrahlen 26 müssten senkrecht eingezeichnet werden. Stattdessen werden die Abtaststrahlen 26 aber zu dem gemeinsamen Abtastpunkt hin geneigt. In X-Richtung voranlaufende Abtaststrahlen 26 blicken zurück, nachlaufende Abtaststrahlen blicken voraus. Dadurch wird ein gemeinsamer Abtastpunkt fixiert, wobei dies wie in Figur 6 gezeigt keine perfekte Überlagerung sein muss. Jedenfalls ist der Winkelbereich der vor- und nachlaufenden Abtaststrahlen 26 kleiner als der zu den Abtaststrahlen 26 gehörige Ausschnitt des Winkelrasters 44. So können bestimmte Punkte und insbesondere kleine Objekte ähnlich der Funktionsweise des Auges länger im Blickfeld gehalten werden.

Figur 7 zeigt nochmals eine Frontalansicht auf mehrere Abtaststrahlen 26, die nun in einem Matrixraster angeordnet sind. In dieser Ausführungsform wird die zweite Ablenkeinheit genutzt, um die Abtaststrahlen 26 in X- und Y-Richtung enger zusammenzurücken. Die Matrix kann auch durch lediglich eine Spalte von Abtaststrahlen 26 entstehen, die dann in Figur 7 überlagert zu mehreren aufeinanderfolgenden Messungen betrachtet ist. Das Zusammenrücken in X-Richtung entspricht dann dem zu Figur 6 erläuterten Vor- und Nachlauf.

Das Zusammenrücken kann vorteilhaft sein, um zusätzliche Messinformation von einem bestimmten Abtastpunkt oder Abtastbereich zu gewinnen. Das ist insbesondere bei einem Pulsmittelungsverfahren von Interesse, damit die Einzelmessungen, die jeweils zu einem Abstandswert beitragen, unter möglichst gleichen Bedingungen am zumindest weitgehend selben Objektpunkt stattfinden. Es ist nicht erforderlich, dass auf ein Zentrum zusammengerückt wird wie in Figur 7, dies kann ebenso auf einem Rand- oder Eckpunkt geschehen.

## Patentansprüche

1. Optoelektronischer Sensor (10), insbesondere Laserscanner, zur Erfassung von Objekten in einem Überwachungsbereich (20), der einen Lichtsender (22) zum Aussenden mindestens eines Abtaststrahls (26), eine bewegliche erste Ablenkeinheit (12) zur periodischen Ablenkung des Abtaststrahls (26) in einer ersten Richtung, eine zweite Ablenkeinheit (27), die dafür ausgebildet ist, den Abtaststrahl (26) allein durch elektrische Steuerung oder höchstens mit mikromechanisch bewegten Elementen zusätzlich abzulenken, einen Lichtempfänger (32) zum Erzeugen eines Empfangssignals aus dem von Objekten in dem Überwachungsbereich (20) remittierten Abtaststrahl (28) sowie eine Steuer- und Auswertungseinheit (40) aufweist, die dafür ausgebildet ist, das Empfangssignal auszuwerten, um mit einem Lichtlaufzeitverfahren den Abstand zu einem mit dem Abtaststrahl (26) angetasteten Objekt zu bestimmen,
**dadurch gekennzeichnet, dass**
die zusätzliche Ablenkung des Abtaststrahls (26) durch die zweite Ablenkeinheit (27) in der ersten Richtung erfolgt und dass
die Steuer- und Auswertungseinheit (40) weiterhin dafür ausgebildet ist, den Abtaststrahl (26) in der ersten Richtung vor-und/oder nachlaufen zu lassen, indem die Abtastbewegung der ersten Ablenkeinheit (12) durch die überlagerte Ablenkung der zweiten Ablenkeinheit (27) vorübergehend beschleunigt oder verlangsamt wird.

2. Sensor (10) nach Anspruch 1,
wobei die zweite Ablenkeinheit (27) eine MEMS-, DMD-, OPA-, LC- oder AOM-Einrichtung oder eine kippbare Flüssiglinse aufweist.

3. Sensor (10) nach Anspruch 1 oder 2,
wobei die zweite Ablenkeinheit (27) von der ersten Ablenkeinheit (12) mitbewegt angeordnet ist.

4. Sensor (10) nach einem der vorhergehenden Ansprüche,
wobei die Steuer- und Auswertungseinheit (40) dafür ausgebildet ist, einen vorlaufenden und/oder nachlaufenden Abtaststrahl (26) in einer Rampe von einem maximalen Vorlauf zu einem maximalen Nachlauf oder umgekehrt vor und/oder nachlaufen zu lassen.

5. Sensor (10) nach einem der vorhergehenden Ansprüche,
wobei die Steuer- und Auswertungseinheit (40) dafür ausgebildet ist, einen Abtaststrahl (26) durch Vorlauf und/oder Nachlauf in der ersten Richtung vorübergehend an einem Abtastpunkt festzuhalten.

6. Sensor (10) nach einem der vorhergehenden Ansprüche,
wobei die Steuer- und Auswertungseinheit (40) dafür ausgebildet ist, an dem Abtastpunkt oder an benachbarten Punkten, die näher benachbart sind als eine ursprüngliche Winkelauflösung einer Abtastung mit der ersten Ablenkeinheit (12), mehrfach eine Lichtlaufzeit zu messen.

7. Sensor (10) nach einem der vorhergehenden Ansprüche,
wobei die Steuer- und Auswertungseinheit (40) dafür ausgebildet ist, einen interessierenden Winkelbereich bezüglich der ersten Richtung durch Vorlauf und/oder Nachlauf mit verbesserter Winkelauflösung abzutasten.

8. Sensor (10) nach einem der vorhergehenden Ansprüche,
wobei die Steuer- und Auswertungseinheit (40) dafür ausgebildet ist, die mit mehreren Abtaststrahlen (26) und/oder in mehreren zeitlich aufeinanderfolgenden Messungen erzeugten Empfangssignale gemeinsam auszuwerten, um mit einem Lichtlaufzeitverfahren den Abstand zu dem Objekt zu bestimmen.

9. Verfahren zur Erfassung von Objekten in einem Überwachungsbereich (20), bei dem mindestens ein Abtaststrahl (26) ausgesandt wird, der Abtaststrahl (26) mittels einer beweglichen ersten Ablenkeinheit (12) periodisch in einer ersten Richtung und mittels einer zweiten Ablenkeinheit (27) allein durch elektrische Steuerung oder höchstens mit mikromechanisch bewegten Elementen zusätzlich abgelenkt wird, aus dem von Objekten in dem Überwachungsbereich (20) remittierten Abtaststrahl (28) ein Empfangssignal erzeugt und das Empfangssignal ausgewertet wird, um mit einem Lichtlaufzeitverfahren den Abstand zu einem mit dem Abtaststrahl (26) angetasteten Objekt zu bestimmen,
**dadurch gekennzeichnet,**
**dass**
die zusätzliche Ablenkung des Abtaststrahls (26) durch die zweite Ablenkeinheit (27) in der ersten Richtung erfolgt und dass die zweite Ablenkeinheit (27) den mindestens einen Abtaststrahl (26) in der ersten Richtung vor- und/oder nachlaufen lässt, indem die Abtastbewegung der ersten Ablenkeinheit (12) durch die überlagerte Ablenkung der zweiten Ablenkeinheit (27) vorübergehend beschleunigt oder verlangsamt wird.

## Claims

1. An optoelectronic sensor (10), in particular laser scanner, for detecting objects in a monitoring area (20), comprising a light transmitter (22) for transmitting at least one scanning beam (26), a movable first deflection unit (12) for periodically deflecting the scanning beam (26) in a first direction, a second deflection unit (27) configured to additionally deflect the scanning beam (26) solely by electrical control or at most using micromechanically moved elements, a light receiver (32) for generating a received signal from the remitted scanning beam (28) remitted by objects in the monitoring area (20), and a control and evaluation unit (40) configured to evaluate the received signal in order to determine the distance to an object scanned with the scanning beam (26) using a light time of flight method,
**characterized in that** the additional deflection of the scanning beam (26) by the second deflection unit (27) takes place in the first direction, and **in that** the control and evaluation unit (40) is further configured to cause the scanning beam (26) to lead and/or trail in the first direction by temporarily accelerating or decelerating the scanning movement of the first deflection unit (12) by the superimposed deflection of the second deflection unit (27).

2. The sensor (10) according to claim 1,
wherein the second deflection unit (27) comprises a MEMS, DMD, OPA, LC or AOM device or a tiltable liquid lens.

3. The sensor (10) according to claim 1 or 2,
wherein the second deflection unit (27) is arranged to be moved along by the first deflection unit (12).

4. The sensor (10) according to any of the preceding claims,
wherein the control and evaluation unit (40) is configured to cause a leading and/or trailing scanning beam (26) to lead and/or trail in a ramp from a maximum lead to a maximum trail or vice versa.

5. The sensor (10) according to any of the preceding claims,
wherein the control and evaluation unit (40) is configured to temporarily hold a scanning beam (26) at a scanning point by leading and/or trailing in the first direction.

6. The sensor (10) according to any of the preceding claims,
wherein the control and evaluation unit (40) is configured to measure a light time of flight a plurality of times at the scanning point or at adjacent points closer than an original angular resolution of a scan with the first deflection unit (12).

7. The sensor (10) according to any of the preceding claims,
wherein the control and evaluation unit (40) is configured to scan an angular range of interest with respect to the first direction with improved angular resolution by leading and/or trailing.

8. The sensor (10) according to any of the preceding claims,
wherein the control and evaluation unit (40) is configured to jointly evaluate the received signals generated with a plurality of scanning beams (26) and/or in a plurality of temporally successive measurements in order to determine the distance to the object with a light time of flight method.

9. A method for detecting objects in a monitoring area (20), wherein at least one scanning beam (26) is transmitted, the scanning beam (26) is periodically deflected in a first direction by means of a movable first deflection unit (12) and is additionally deflected by means of a second deflection unit (27) solely by electrical control or at most with micromechanically moved elements, a received signal is generated from the remitted scanning beam (28) remitted by objects in the monitoring area (20), and the received signal is evaluated in order to determine the distance to an object scanned with the scanning beam (26) by means of a light time of flight method,
**characterized in that** the additional deflection of the scanning beam (26) by the second deflection unit (27) takes place in the first direction, and **in that** the second deflection unit (27) causes the at least one scanning beam (26) to lead and/or trail in the first direction by temporarily accelerating or decelerating the scanning movement of the first deflection unit (12) as a result of the superimposed deflection of the second deflection unit (27).

## Revendications

1. Capteur optoélectronique (10), en particulier scanner laser, pour détecter des objets dans une zone de surveillance (20), comprenant un émetteur de lumière (22) pour émettre au moins un faisceau de balayage (26), une première unité de déviation mobile (12) pour dévier périodiquement le faisceau de balayage (26) dans une première direction, une deuxième unité de déviation (27) configurée pour dévier en outre le faisceau de balayage (26) uniquement par commande électrique ou au maximum à l'aide d'éléments à déplacement micromécanique, un récepteur de lumière (32) pour générer un signal de réception à partir du faisceau de balayage (28) réémis par des objets dans la zone de surveillance (20), et une unité de commande et d'évaluation (40) configurée pour évaluer le signal de réception afin de déterminer la distance à un objet balayé avec le faisceau de balayage (26) en utilisant un procédé de temps de vol de la lumière,
**caractérisé en ce que** la déviation supplémentaire du faisceau de balayage (26) par la deuxième unité de déviation (27) est effectuée dans la première direction, et **en ce que** l'unité de commande et d'évaluation (40) est en outre configurée pour faire advancer et/ou suivre le faisceau de balayage (26) dans la première direction en accélérant ou en décélérant temporairement le mouvement de balayage de la première unité de déviation (12) par la déviation superposée de la deuxième unité de déviation (27).

2. Capteur (10) selon la revendication 1,
dans lequel la deuxième unité de déviation (27) comprend un dispositif MEMS, DMD, OPA, LC ou AOM ou une lentille liquide inclinable.

3. Capteur (10) selon la revendication 1 ou 2,
dans lequel la deuxième unité de déviation (27) est agencée pour être déplacée par la première unité de déviation (12).

4. Capteur (10) selon l'une des revendications précédentes,
dans lequel l'unité de commande et d'évaluation (40) est configurée pour faire avancer et/ou retarder un faisceau de balayage (26) en avance et/ou en retard dans une rampe allant d'une avance maximale à un retard maximal ou inversement.

5. Capteur (10) selon l'une des revendications précédentes,
dans lequel l'unité de commande et d'évaluation (40) est configurée pour maintenir temporairement un faisceau de balayage (26) à un point de balayage par avance et/ou retard dans la première direction.

6. Capteur (10) selon l'une des revendications précédentes,
dans lequel l'unité de commande et d'évaluation (40) est configurée pour mesurer plusiers fois un temps de vol de la lumière au point de balayage ou à des points adjacents plus proches qu'une résolution angulaire initiale d'un balayage avec la première unité de déviation (12).

7. Capteur (10) selon l'une des revendications précédentes,
dans lequel l'unité de commande et d'évaluation (40) est configurée pour balayer une zone angulaire d'intérêt par rapport à la première direction avec une résolution angulaire améliorée par avance et/ou retard.

8. Capteur (10) selon l'une des revendications précédentes,
dans lequel l'unité de commande et d'évaluation (40) est configurée pour évaluer conjointement les signaux reçus générés avec une pluralité de faisceaux de balayage (26) et/ou dans une pluralité de mesures successives temporelle afin de déterminer la distance à l'objet avec un procédé de temps de vol de la lumière.

9. Procédé de détection d'objets dans une zone de surveillance (20), dans lequel au moins un faisceau de balayage (26) est émis, le faisceau de balayage (26) est dévié périodiquement dans une première direction au moyen d'une première unité de déviation mobile (12) et est en outre dévié au moyen d'une deuxième unité de déviation (27) uniquement par commande électrique ou au maximum avec des éléments à déplacement micromécanique, un signal de réception est généré à partir du faisceau de balayage (28) renvoyé par des objets dans la zone de surveillance (20), et le signal de réception est évalué afin de déterminer la distance à un objet balayé avec le faisceau de balayage (26) au moyen d'un procédé de temps de vol de la lumière,
**caractérisé en ce que** la déviation supplémentaire du faisceau de balayage (26) est effectuée par la deuxième unité de déviation (27) dans la première direction et **en ce que** la deuxième unité de déviation (27) fait avancer et/ou suivre le au moins un faisceau de balayage (26) dans la première direction en accélérant ou en décélérant temporairement le mouvement de balayage de la première unité de déviation (12) par la déviation superposée de la deuxième unité de déviation.
